# EUROPEAN PATENT SPECIFICATION

(11) **EP 1 970 353 B1**
(45) Date of publication and mention of the grant of the patent: **29.09.2010**
(21) Application number: 07115391.0
(22) Date of filing: 31.08.2007
(51) Int. Cl.: C02F 1/74, C02F 3/12, C02F 3/00

(54) **Method and device for reduction of hydrogen sulfide**
Verfahren und Vorrichtung zur Reduktion von Schwefelwasserstoff
Procédé et dispositif pour la réduction de sulfure d'hydrogène

(30) Priority: 31.08.2006 SE 0601796
(43) Date of publication of application: 17.09.2008
(73) Proprietor: Strömhage, Ragnvald, 439 33 Onsala (SE)
(72) Inventor: Strömhage, Ragnvald, 439 33 Onsala (SE)
(74) Representative: Edlund, Fabian

(56) References cited:
- EP-A- 1 475 354
- GB-A- 1 452 961
- GB-A- 1 593 375
- GB-A- 2 311 990
- US-A- 3 957 633

## Description

### Technical Field

The present invention relates to a method and a device for oxygenating wastewater in a tank to reduce the amount of hydrogen sulphide.

### Background of the Invention

A common problem in storing wastewater is the formation of hydrogen sulphide due to the action of facultative bacteria present in the wastewater. These bacteria normally breathe oxygen dissolved in wastewater, but if the supply of oxygen stops they get their breathing oxygen by reduction of compounds containing oxygen, especially sulphates. This bacterial reduction of sulphates produces hydrogen sulphide, an evil smelling and poisonous gas. Sometimes lethal concentrations are reached.

The problem is acute when there is a need to store wastewater for a period of time in a tank, for instance when a ship is storing wastewater in a sewage tank onboard while being at sea, or when wastewater from several buildings is temporarily stored in a collecting tank. In such a tank the oxygen is soon consumed, after which the amount of hydrogen sulphide rapidly increases. It is particularly obvious when the wastewater contains organic waste, such as kitchen waste and food waste. When the wastewater is later to be drained, the amount of hydrogen sulphide may be too high. This may, for instance, result in a ship not being allowed by the authorities to discharge its wastewater tank to the sewer system ashore.

In general, various methods have been tried to inhibit bacterial activity creating hydrogen sulphide. Bacterial activity can, for instance, be inhibited by adding gaseous chlorine, which may result in sterilisation of the wastewater. But at the same time chlorine is poisonous and strongly corrosive. Use can also be made of other additives, such as Nutriox® and calcium nitrate, which are effective but tend to result in high operating costs since they are expensive.

Another alternative is to refresh the wastewater by supplying air, as described in, for instance, US patent 4,148,726, US patent 4,070,279 and SE 366013

US 4,148,726 discloses a process in which wastewater in a sewer is pumped into a chamber in which pure oxygen, or a gas containing more oxygen than air, is supplied under pressure, after which the oxygenated wastewater is returned to the sewer by an injector located under the surface.

US 4,070,279 discloses a device for dissolving at least one gas in a liquid by an ejector immersed in the liquid. A high turbulence mixing device is used to enhance the effect of the oxygenation.

SE 366 013 discloses a device for treating wastewater. The oxygenation is provided by pumping back part of the water by means of the ordinary sewage pumps at times when they are not used to pump the water through the sewer system. Whether the oxygenated water is returned to the pump well or pumped to the sewer system is controlled by the water level in the pump well.

Also GB 1452961 and US 3957633 present the methods of hydrogen sulphide removal from wastewater.

One problem of prior art is thus that relatively complicated solutions are needed to provide the desired effect, such as gas with a high oxygen content supplied under pressure, or an additional step consisting of using a high turbulence device. Another problem of prior art is the difficulty to prevent wastewater with high amounts of hydrogen sulphide from being pumped out when draining.

### Summary of the Invention

Therefore an object of the present invention is to alleviate the above-mentioned problems and to provide a method and device for reducing hydrogen sulphide, resulting in less investment costs, less need for maintenance and more operational reliability, while wastewater with high amounts of hydrogen sulphide is prevented from being pumped out when draining.

According to a first aspect of the present invention, this object is achieved by a method for reducing the amount of hydrogen sulphide in wastewater in a tank, comprising diverting a flow from said tank, oxygenating said flow by contact with an oxygen-containing gas, and returning said flow to said tank above a liquid level in the tank, the amount of hydrogen sulphide in said tank being measured, and the diversion of said flow being controlled based on the amount of hydrogen sulphide.

According to another aspect of the present invention, this object is achieved by a device for reducing the amount of hydrogen sulphide in wasterwater in a tank, comprising an outlet for diverting a flow from said tank, a means for oxygenating said flow, a nozzle, located above a liquid level in said tank, for returning said flow to said tank, and a pump for pumping said flow from said outlet via said oxygenating means to said nozzle, a measuring means being arranged to measure the amount of hydrogen sulphide in said tank, and a control unit being arranged to control the pump based on a measuring signal from the measuring means.

Since the flow is returned above the surface, the flow can be driven by a conventional sewage pump, which is considerably cheaper than the compressors normally required to return oxygenated water below the surface. It has also been found that a better oxygenating effect is provided if the flow is returned to the tank above the surface, resulting in an increased reduction of hydrogen sulphide. The increased oxygenation is probably due to the fact that the flow is spread in the air as it leaves the nozzle and that the diverted flow causes agitation in the tank.

When the amount of hydrogen sulphide in the tank is measured by a suitable transducer, the diversion of wastewater can be initiated when the amount of hydrogen sulphide exceeds a start threshold value and stopped again when the amount of hydrogen sulphide falls below a stop threshold value. This results in reduced energy consumption and less wear on the equipment as the oxygenation only takes place when needed. At the same time, it is ensured that the oxygenation proceeds until the amount of hydrogen sulphide has fallen to a desired level, thus preventing wastewater with high amounts of hydrogen sulphide from being pumped out when draining.

The return of oxygenated water above the surface has already been used in water treatment in a continuous process. For example, US 5,525,242 discloses a device for treatment of domestic water in which the amount of hydrogen sulphide is reduced by passing the liquid through a venturi nozzle, where the liquid is mixed with air, after which the oxygenated liquid is discharged from the nozzle in a confined stream into the purified liquid, a nozzle advantageously being located above the surface. The device is included in a water treatment system which is integrated in a water supply system. The water treatment system comprises a tank, in which the treatment is effected, and water is oxygenated when introduced into the tank. After oxygenation and treatment, the water returns to the water supply system for repeated use. Since the water in this system follows a cycle, the amounts of hydrogen sulphide are very small and essentially completely eliminated by the described oxygenation.

Unlike the situation in US 5,525,242, the present invention is related to a tank in which contaminated water is sufficiently stagnant for hydrogen sulphide to form in very high amounts. The method and the device according to the invention are thus based on a feedback process, in which oxygenated water is returned to the tank and can thus be oxygenated again and again.

The present invention is, among other things, based on the surprising finding that the return of oxygenated water above the surface, in the way already applied when treating small amounts of water in a continuous process, can also result in very positive effects when removing high amounts of hydrogen sulphide from a tank for highly contaminated water, if the oxygenation is applied to a feedback flow. By controlling the diversion of the flow from the tank based on the amount of hydrogen sulphide, it can be ensured that the oxygenation proceeds until the amount of hydrogen sulphide has fallen to a desired level so that wastewater with high amounts of hydrogen sulphide is not discharged when draining.

Advantageously, the gas is supplied to the wastewater through an ejector, which means that, as the wastewater passes through said ejector at high velocity, gas containing oxygen enters through an air inlet of the ejector and mixes with the wastewater. Thus, no additional equipment, such as a pressure chamber, is needed in the oxygenation process.

The ratio between the capacity to pump the wastewater from the tank for oxygenation and the volume of the tank is advantageously such that a volume corresponding to the volume of the tank can be circulated in 20 hours, preferably in 10 hours, and more preferably in less time.

Furthermore, the tank can suitably be equipped with a closable discharge. Sufficient pumping capacity and the possibility of closing the discharge contribute to ensure good circulation of the wastewater in the tank and thus good oxygenation.

The gas used to oxygenate the wastewater is preferably ambient air from the outside of the tank. There is thus no need for any specially composed gas or equipment for storing and handling the same.

Advantageously, venting is provided to regulate the excess gas that forms as oxygenated wastewater is returned to the tank, thus preventing excess pressure from building up in the tank.

The oxygenated water can be returned in a coherent jet, which is injected in a suitable direction. Alternatively, the oxygenated wastewater can be returned to the tank in the form of a dispersed jet which spreads the oxygenated wastewater in the tank. The angle of spread of such a dispersed jet is suitably at least 20°. The water is thus sprayed into the tank, which results in maximum contact with the air in the tank and good spreading of the oxygenated wastewater when it is returned to the tank.

When entering the tank, the jet can have a substantially horizontal centre line, i.e. substantially parallel with the liquid surface in the tank. This, in combination with the dispersion of the jet, further contributes to the water spray only slowly reaching the water surface, which results in good spreading in the tank.

Further objects, characteristics and advantages of the present invention will be apparent from the detailed description below and from the appended claims and drawings.

### Brief Description of the Drawings

The invention will now be described in more detail with reference to the accompanying drawing, which for the purpose of exemplification shows presently preferred embodiments of the present invention.

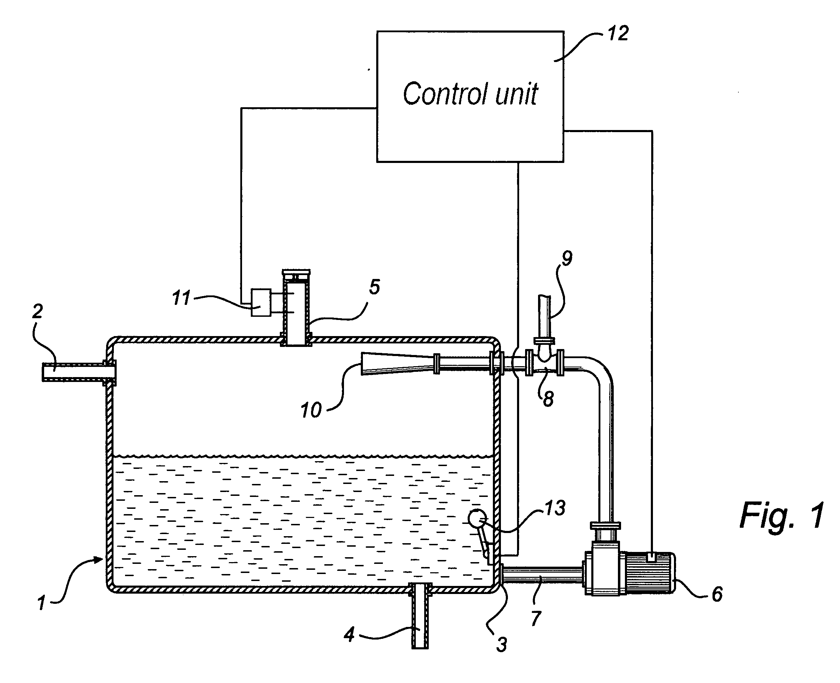

Fig. 1 is a basic sketch of a preferred embodiment of the invention.

### Description of Preferred Embodiments

With reference to Fig. 1, a preferred embodiment of the invention comprises a tank 1, in this case a storage tank for a ship. A typical volume of such a tank is between 10 and 300 m³, but the invention is not limited to these volumes, and applications to other tanks, also bigger tanks of the kind used ashore, are also feasible. The tank 1 is provided with at least one inlet 2 and at least one outlet 3, which is suitably located in the lower portion of the tank 1, in this case in one of the walls of the tank 1. The tank can further have a discharge 4, which in this case is located at the bottom of the tank. As an alternative, said outlet 3 and said discharge 4 can be combined in one discharge.

In the shown example, the tank 1 is provided with a venting valve 5, which is suitably dimensioned so as to be able to let out the excess gas that may form in the tank 1 in connection with the oxygenation of the wastewater. The venting is suitably performed by a stack, so that gas containing hydrogen sulphide which may be present will not cause any inconvenience or danger.

A pump 6 is connected to the outlet 3 of the tank by a pipe 7. The pump 6 can be any type of conventional pump suitable for the specific application, and it preferably has the capacity to circulate a volume corresponding to the total volume of the tank in 10 hours. If a faster circulation is needed, a more powerful pump is simply used. In the shown embodiment, in which the tank volume is about 50 m³, the pump 6 is a Herboner pump which can pump 5 m³ per hour.

In the shown example, the pipe 7 continues from the pump 6 to an oxygenation means, which in this case is an ejector 8 (e.g. an EVAK ejector). The ejector 8 is also connected to an air inlet 9.

To provide efficient oxygenation, a high air to water ratio is needed. In the shown embodiment, in which the tank 1 has a tank volume of 50 m³, the dimension of the pipe 7 is, for instance, DN 80 (3"), whereas the dimension of the air inlet 9 is, for instance, DN 50 (2").

In the shown example, the pipe 7 continues from the outlet of the ejector 8 and is terminated by a nozzle 10 located above the liquid level in the tank 1. In this case, the nozzle 10 is horizontally directed, parallel with the liquid surface in the tank 1, but it can alternatively be vertically directed (upwards or downwards) or directed somewhere between. The nozzle can, for example, be arranged in the ceiling of the tank and be downwardly directed.

In the preferred embodiment, the nozzle 10 is further designed so that the wastewater will be dispersed in a spray when injected into the tank, but it can alternatively be designed so that the wastewater will be injected in a focussed jet.

The system may also include a measuring means 11 (e.g. a Polytron 7000 gas detector with integrated blower) which is suitably located at the venting valve 5 for measuring the amount of hydrogen sulphide. The measuring means can be connected to a control unit 12 arranged to produce a control signal to the pump 6.

The shown example further includes a level detector 13 (e.g. a Mobrey or an ultrasonic transducer), which is also connected to the control unit 12.

In the following the function of the system will be described.

The wastewater is supplied to the tank 1 through the inlet 2, and collected and stored therein, thereby making it possible for hydrogen sulphide to form. Possibly, organic material, such as ground food waste, also gathers in the tank 1, which further contributes to the formation of hydrogen sulphide. As large amounts of new wastewater are supplied to the tank 1, the amount of hydrogen sulphide normally rapidly increases to 200-300 ppm or more. By the discharge 4, the tank 1 can be drained of wastewater, which in the case of a ship's tank is performed when the ship is moored in port. The measuring means 11 ensures that drainage does not occur when the amount of hydrogen sulphide exceeds a determined threshold value (e.g. 10 ppm).

The control unit 12 receives measuring signals from the measuring means 11 and the level transducer 13. When the measuring signals indicate that the amount of hydrogen sulphide exceeds a predetermined value, for example 10 ppm, at the same time as the level in the tank exceeds the upper edge of the outlet 3, the control unit produces a control signal starting the pump 6.

The pump diverts a flow of wastewater from the tank 1 through the outlet 3 for oxygenation. Since the outlet 3 is located in the lower portion of the tank 1, oxygenation can take place also when the tank 1 is only partially filled.

The flow which is pumped from the tank 1 reaches the ejector 8 through the pipe 7. As the flow passes through the ejector 8 at high velocity, gas containing oxygen flows in through the air inlet 9 and mixes with the wastewater. The gas is advantageously ambient air from the outside of the tank 1.

After having passed the ejector 8, the flow is returned with oxygenated wastewater to the tank 1 through the nozzle 10.

When the pump 6 has started and the oxygenation is initiated, the amount of hydrogen sulphide usually decreases quickly and, with the above-indicated exemplifying values of volume, flow, etc., it is normally back to below the threshold value of 10 ppm in a couple of hours. This causes a change of the measuring signal from the measuring means 11 to the control unit, which in its turn produces a control signal to shut off the pump.

The venting valve 5 vents the excess gas forming in the tank 1 in connection with the oxygenation of the wastewater.

It will be understood that a number of modifications of the above described embodiment are feasible within the scope of the invention, as defined in the appended claims.

## Claims

1. A method for reducing the amount of hydrogen sulphide in wastewater in a tank (1), comprising
diverting a flow from said tank,
oxygenating said flow by contact with an oxygen-containing gas, and returning said flow to said tank (1) above a liquid level in the tank (1),
**characterised by**
measuring the amount of hydrogen sulphide in said tank (1), and
controlling the diversion of said flow based on the amount of hydrogen sulphide.

2. A method as claimed in claim 1, wherein said flow is oxygenated by supplying said gas by ejector action.

3. A method as claimed in any one of the preceding claims, wherein the flow is adjusted so as to circulate a volume corresponding to the volume of the tank in 20 hours, preferably in 10 hours.

4. A method as claimed in any one of the preceding claims, wherein said gas is ambient air.

5. A method as claimed in any one of the preceding claims, further comprising venting of excess gas which forms as oxygenated wastewater is returned to said tank (1).

6. A method as claimed in any one of the preceding claims, wherein said flow is returned to said tank (1) by a dispersed jet which spreads said flow, for example at an angle of spread of at least 20°.

7. A method as claimed in claim 6, wherein said jet when entering the tank (1) has a horizontal centre line.

8. A device for reducing the amount of hydrogen sulphide in wastewater in a tank (1), comprising
an outlet (3) for diverting a flow from said tank (1),
a means (8) for oxygenating said flow,
a nozzle (10), located above a liquid level in said tank (1), for returning said flow to said tank (1), and
a pump (6) for pumping said flow from said outlet to said nozzle,
**characterised by** a measuring means (11) arranged to measure the amount of hydrogen sulphide in said tank (1), and a control unit (12) arranged to control the pump based on a measuring signal from the measuring means.

9. A device as claimed in claim 8, wherein said means (8) for oxygenation is an ejector.

10. A device as claimed in claim 8 or 9, further comprising a closable discharge (4).

11. A device as claimed in any one of claims 8-10, wherein said pump (6) is adapted to circulate a volume corresponding to the volume of the tank in 20 hours, preferably in 10 hours.

12. A device as claimed in any one of claims 8-11, wherein said tank (1) is intended for wastewater onboard a ship.

13. A device as claimed in any one of claims 8-12, wherein said gas is ambient air.

14. A device as claimed in any one of claims 8-13, further comprising a venting valve (5) arranged to vent excess gas that forms as oxygenated wastewater is returned to the tank (1).

15. A device as claimed in any one of claims 8-14, wherein said nozzle (10) is arranged to spread said flow, for example at an angle of spread of at least 20°.

16. A device as claimed in claim 15, wherein said nozzle (10) is horizontally directed.

## Patentansprüche

1. Verfahren zur Verringerung der Schwefelwasserstoffmenge im Abwasser in einem Tank (1), wobei das Verfahren das Folgende umfasst:
Abzweigen eines Stroms aus dem Tank,
Anreichern des Stroms mit Sauerstoff durch Kontakt mit einem sauerstoffhaltigen Gas und
Zurückleiten des Stroms in den Tank (1) oberhalb eines Flüssigkeitsstandes in dem Tank (1),
**gekennzeichnet durch dass**
Messen der Schwefelwasserstoffmenge in dem Tank (1) und das
Steuern der Abzweigung des Stroms auf der Grundlage der Schwefelwasserstoffmenge.

2. Verfahren nach Anspruch 1, wobei der Strom mit Sauerstoff angereichert wird, indem das Gas über eine Ausstoßvorrichtung zugeführt wird.

3. Verfahren nach einem der vorhergehenden Ansprüche, wobei der Strom so eingestellt wird, dass in 20 Stunden, vorzugsweise 10 Stunden, ein Volumen zirkuliert, welches dem Tankvolumen entspricht.

4. Verfahren nach einem der vorhergehenden Ansprüche, wobei es sich bei dem Gas um Umgebungsluft handelt.

5. Verfahren nach einem der vorhergehenden Ansprüche, welches ferner das Ablassen von überschüssigem Gas umfasst, das sich bildet, wenn mit Sauerstoff angereichertes Abwasser in den Tank (1) zurückgeleitet wird.

6. Verfahren nach einem der vorhergehenden Ansprüche, wobei der Strom über einen Streustrahl in den Tank (1) zurückgeleitet wird, welcher den Strom aufspreizt, zum Beispiel in einem Spreizwinkel von mindestens 20°.

7. Verfahren nach Anspruch 6, wobei der Strahl, wenn er in den Tank (1) eintritt, eine horizontale Mittellinie aufweist.

8. Vorrichtung zur Verringerung der Schwefelwasserstoffmenge im Abwasser in einem Tank (1), welche das Folgende umfasst:
einen Auslass (3) zum Abzweigen eines Stroms aus dem Tank (1),
ein Mittel (8) zum Anreichern des Stroms mit Sauerstoff,
einen Stutzen (10), welcher sich über einem Flüssigkeitsstand in dem Tank (1) befindet, zum Zurückleiten des Stroms in den Tank (1) und
eine Pumpe (6) zum Pumpen des Stroms von dem Auslass zu dem Stutzen,
**gekennzeichnet durch** ein Messmittel (11), welches so eingerichtet ist, dass es die Schwefelwasserstoffmenge in dem Tank (1) misst, und eine Steuereinheit (12), welche so eingerichtet ist, dass sie die Pumpe auf der Grundlage eines Messsignals von dem Messmittel steuert.

9. Vorrichtung nach Anspruch 8, wobei es sich bei dem Mittel (8) zum Anreichern des Stroms mit Sauerstoff um eine Ausstoßvorrichtung handelt.

10. Vorrichtung nach Anspruch 8 oder 9, welche ferner einen verschließbaren Abfluss (4) umfasst.

11. Vorrichtung nach einem der Ansprüche 8 bis 10, wobei die Pumpe (6) dafür geeignet ist, in 20 Stunden, vorzugsweise 10 Stunden, ein Volumen zirkulieren zu lassen, welches dem Tankvolumen entspricht.

12. Vorrichtung nach einem der Ansprüche 8 bis 11, wobei der Tank (1) für Abwasser an Bord eines Schiffes vorgesehen ist.

13. Vorrichtung nach einem der Ansprüche 8 bis 12, wobei es sich bei dem Gas um Umgebungsluft handelt.

14. Vorrichtung nach einem der Ansprüche 8 bis 13, welche ferner ein Ablassventil (5) umfasst, das so eingerichtet ist, dass es überschüssiges Gas ablässt, welches sich bildet, wenn mit Sauerstoff angereichertes Abwasser in den Tank (1) zurückgeleitet wird.

15. Vorrichtung nach einem der Ansprüche 8 bis 14, wobei der Stutzen (10) so eingerichtet ist, dass der Strom gespreizt wird, zum Beispiel in einem Spreizwinkel von mindestens 20°.

16. Vorrichtung nach Anspruch 15, wobei der Stutzen (10) eine horizontale Richtung aufweist.

## Revendications

1. Procédé de réduction de la quantité de sulfure d'hydrogène dans les eaux usées d'un réservoir (1), comprenant :
la dérivation d'un courant provenant dudit réservoir,
l'oxygénation dudit courant par contact avec un gaz contenant de l'oxygène, et
le renvoi dudit courant dans ledit réservoir (1) au-dessus d'u niveau de liquide dans le réservoir (1), **caractérisé par**
la mesure de la quantité de sulfure d'hydrogène dans ledit réservoir (1), et
le contrôle de la dérivation dudit courant en fonction de la quantité de sulfure d'hydrogène.

2. Procédé tel que revendiqué dans la revendication 1, dans lequel ledit courant est oxygéné en envoyant ledit gaz par une action d'injection.

3. Procédé tel que revendiqué dans l'une quelconque des revendications précédentes, dans lequel le courant est réglé de façon à circuler selon un volume correspondant au volume du réservoir en 20 heures, de préférence en 10 heures.

4. Procédé tel que revendiqué dans l'une quelconque des revendications précédentes, dans lequel ledit gaz est l'air ambiant.

5. Procédé tel que revendiqué dans l'une quelconque des revendications précédentes, comprenant en outre l'évacuation de l'excès de gaz qui se forme tandis que les eaux usées oxygénées sont renvoyées dans ledit réservoir (1).

6. Procédé tel que revendiqué dans l'une quelconque des revendications précédentes, dans lequel ledit courant est renvoyé dans ledit réservoir (1) à l'aide d'un jet de dispersion qui disperse ledit courant, par exemple à un angle de dispersion d'au moins 20°.

7. Procédé tel que revendiqué dans la revendication 6, dans lequel ledit jet de dispersion entrant dans le réservoir (1) a une ligne médiane horizontale.

8. Dispositif de réduction de la quantité de sulfure d'hydrogène dans les eaux usées d'un réservoir (1), comprenant
une sortie (3) permettant de dériver un courant provenant dudit réservoir (1),
un moyen (8) d'oxygénation dudit courant,
une buse (10), située au-dessus d'un niveau de liquide dans ledit réservoir (1), pour renvoyer ledit courant dans ledit réservoir (1), et
une pompe (6) pour aspirer ledit courant de ladite sortie dans ladite buse,
**caractérisé par** un moyen de mesure (11) agencé de façon à mesurer la quantité de sulfure d'hydrogène dans ledit réservoir (1), et une unité de commande (12) agencée de façon à commander la pompe en fonction d'un signal de mesure émis par le moyen de mesure.

9. Dispositif tel que revendiqué dans la revendication 8, dans lequel ledit moyen (8) d'oxygénation est un éjecteur.

10. Dispositif tel que revendiqué dans la revendication 8 ou 9, comprenant en outre un système de refoulement fermable (4).

11. Dispositif tel que revendiqué dans l'une quelconque des revendications 8 à 10, dans lequel ladite pompe (6) est adaptée pour faire circuler un volume correspondant au volume du réservoir en 20 heures, de préférence en 10 heures.

12. Dispositif tel que revendiqué dans l'une quelconque des revendications 8 à 11, dans lequel ledit réservoir (1) est destiné aux eaux usées à bord d'un navire.

13. Dispositif tel que revendiqué dans l'une quelconque des revendications 8 à 12, dans lequel ledit gaz est l'air ambiant.

14. Dispositif tel que revendiqué dans l'une quelconque des revendications 8 à 13, comprenant en outre une soupape d'évacuation (5) agencée de façon à évacuer l'excès de gaz qui se forme tandis que les eaux usées oxygénées sont renvoyées dans le réservoir (1).

15. Dispositif tel que revendiqué dans l'une quelconque des revendications 8 à 14, dans lequel ladite buse (10) est agencée de façon à disperser ledit courant, par exemple à un angle de dispersion d'au moins 20°.

16. Dispositif tel que revendiqué dans la revendication 15, dans lequel ladite buse (10) est orientée à l'horizontale.
